# EUROPEAN PATENT APPLICATION

(11) **EP 4 806 639 A2**
(43) Date of publication of application: **16.09.2026**
(21) Application number: 26163889.4
(22) Date of filing: 11.03.2026
(51) Int. Cl.: B32B 37/15, B32B 7/12, B32B 27/10, B32B 38/04, B32B 38/10, B65D 5/02

(54) **METHOD FOR MANUFACTURING A LAMINATED PACKAGING MATERIAL, THE LAMINATED PACKAGING MATERIAL THEREOF, PACKAGING CONTAINER COMPRISING THE MATERIAL AND METHOD OF MANUFACTURING CONTAINER**

(30) Priority: 11.03.2025 EP 25163017
(71) Applicant: Tetra Laval Holdings & Finance S.A., 1009 Pully (CH)
(72) Inventor: KARLSSON, Robin, 221 86 Lund (SE); KHAYYAMI ERLANDSSON, Sara, 221 86 Lund (SE); ÖBERG, Jakob, 221 86 Lund (SE)
(74) Representative: Tetra Pak Patent Attorneys

(57) **Abstract**

The present invention relates to a method for producing a laminated packaging material (10) for packaging of liquid or semi-liquid food products wherein a transfer film (20) is laminated to a bulk layer (12) by polymer melt extrusion. The invention further relates to a laminated packaging material made according to the method, to a packaging container (58a; 58b; 58c; 58d) comprising the laminated packaging material and to a method of forming such a packaging container.

## Description

### Technical field

The present invention relates to a method for producing a laminated packaging material for packaging of liquid or semi-liquid food products comprising laminating a transfer film to a bulk layer by polymer melt extrusion, to a laminated packaging material optionally made according to the method, to a packaging container comprising the laminated packaging material and to a method of forming such a packaging container.

### Background of the invention

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium (Al) foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer. As mentioned above, these layers are also liquid-tight.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally cuboid shape, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced in bacteria and the filled packaging container is produced under clean conditions such that the filled package may be stored for a long time even at ambient temperature, without the risk of growth of micro-organisms in the filled product. Another important advantage of the Tetra Brik^{®}-type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A packaging laminate of the above-described type is conventionally produced by a process in which a web of paper or paperboard is united with a prefabricated web of aluminium which, with good adhesive strength, is bonded to the paper or paperboard web, with the aid of a thermoplastic bonding layer which is extruded between the webs. The webs are thereafter coated with thin layers of polyethylene which are extruded on both sides of the webs for the formation of the outer, liquid-tight plastic layers of the packaging laminate.

By such means, the packaging laminate can be given good integrity and internal adhesive or bonding strength, which is a vital precondition to be able to produce a mechanically strong and configurationally stable package from the packaging laminate.

In recent years, the majority of the producers of food packaging containers are focusing on reaching recyclability and sustainability standards promoted by various governments and other institutions, such as the European Union. The objective of these efforts is to deliver a future carton-based packaging container, made to a larger extent of renewable packaging materials, and being to a higher degree recyclable, in order to reduce waste and pollution.

A layer of an aluminium foil in the packaging laminate provides gas barrier properties quite superior to most other gas barrier materials. The conventional aluminium foil based packaging laminate for liquid food aseptic packaging is still the most cost-efficient packaging material, at its level of performance, available on the market today.

However, there is a need to provide alternative barrier materials to aluminium foil to reduce the carbon footprint further. Aluminium foil barriers for liquid carton food packaging are normally from 5 to 9 µm in thickness, such as most commonly about 6 µm.

Any other material to compete with the foil-based materials should be cost-efficient regarding raw materials, have comparable food preserving properties, a reduced carbon footprint and have a comparably low complexity in the converting of materials into a finished packaging laminate.

Among the efforts of developing non-aluminium-foil materials for liquid food carton packaging, there is a general incentive towards developing pre-manufactured films or sheets having high barrier properties, or towards combining several separate barrier materials in a multilayer film or sheet. Such films or sheets would replace the aluminium-foil barrier material in the conventional laminated packaging material and may further be adapted to conventional processes for lamination and manufacturing of laminated packaging materials.

In line with increased requirements to use only sustainable materials, polymeric barrier materials originating from fossil sources have become less interesting, and thus it remains to work with the types of thin barrier coatings which would be almost negligible in recycling processes and cause very little problems in an economy based on circulation of materials and renewable (non-fossil) materials, i.e. aqueous dispersion coatings and vapour deposition coatings. Such coatings are applied on substrates which do not typically provide significant barrier properties themselves e.g. polyolefin, polyester or paper. The thickness of a dispersion-coated polymer is around 0.5 to 4 µm, while vapour-deposited barrier coatings are as thin as below 0.5 µm, such as from 5 to 200 nm, from 10 to 100 nm, from 15 to 80 nm, or from 20 to 50 nm. Various such coatings have been developed for many years and have been combined in multilayer packaging material structures in search for an improved total performance. Typical materials for vapour-deposited barrier coatings are aluminium, aluminium oxide and silicon oxide. Such gas barrier coatings are discussed for example in WO2013/041469 and WO2023/186448 of the applicant.

A conventional method of adding vapour-deposited barrier coatings to carton or paper based packaging materials for liquid food comprises a pre-step of preparing a metallized film by physical vapour deposition of a metal coating onto a substrate polymer film. Such a metallized polymer film is laminated to the core layer, and may subsequently be covered by additional polymer or coating layers to form a ready-to-use packaging material.

A second aspect of sustainability is reducing the amount of polymer used in the laminated packaging material. A high proportion of fibre content is desirable. While the above-mentioned process has proven to provide a high quality packaging material fulfilling several requirements, it has the draw-back that it adds a further layer to the laminated material structure, i.e. a rather thick polymer substrate film, which often comprises a polymer that is different from the other polymer layers in the laminated material.

From a recycling point of view, it would be easiest and best if the total recovered polymer fraction had a uniform composition and quality, but this is not usually completely possible. A carrier film from polyethylene terephthalate (PET) is for example less desirable if other polymer layers in the laminate are polyolefin type polymers. A substrate or carrier film of polypropylene (PP) would for example be preferable to use compared with a carrier film from polyethylene terephthalate, from the recycling point of view. PP may on the other hand entail drawbacks, such as being less stable to high temperatures and heat load, or having lower barrier properties to migration of low-molecular compounds, than e.g. a PET or PA (polyamide) film. From recycling point of view, it would even be preferable to avoid including a polymer film carrier or substate in the packaging material in the first place, such that no further polymer types are introduced into the laminate, other than the type present in e.g. the one or more heat sealable inside layers, usually polyethylene.

It could be possible to avoid including the further carrier polymer film, by using a so-called "transfer metallization" method. Such methods involve a temporary metallized carrier film which is laminated to a further base layer or laminate, using wet lamination or dry lamination. These known methods require adhesive materials which may be disadvantageous from an environmental and health perspective, while they also require a cumbersome lamination process. Transfer metallization methods are also known to be slow lamination methods, as the adhesives used in the art take time to dry or cure and because the carrier film must be removed from the lamination process in an additional operation simultaneously with lamination, thereby leaving the metal layer on the laminated material.

WO2022/175433 of Societe des Produits Nestle S.A. discloses a multilayer packaging material formed as a semi-rigid or rigid unitary sheet comprising from its outer surface to its inner surface a polymer dispersion coating, a semi-rigid or rigid paperboard layer, a layer of water-based or solvent-less adhesive, a protective coating layer, a layer of aluminium, a release coating and a sealable coating. The aluminium layer may be applied using transfer metallisation.

CA2503202 discloses preparing a metallised packaging material by laminating a metallised release film to paperboard using an extruded polymer layer between the metallised release film and the paperboard. The metallised layer is therefore laminated directly to the paperboard with an intermediate layer of extruded polymer.

There remains a need to realise a method of producing a laminated packaging material where vapour-deposited barrier coatings can be applied on paperboard which has pre-fabricated crease lines and/or holes for subsequent steps of e.g. forming packaging containers for liquid or semi-liquid food products.

### Summary of the invention

In a first aspect, the invention relates to a method for producing a laminated packaging material for packaging of liquid or semi-liquid food products, comprising: providing a bulk layer of paper or paperboard or other cellulose-based material, providing a transfer film, the transfer film comprising in the following order a carrier film, a release layer, a deposited gas barrier coating and a gas barrier polymer coating, laminating the transfer film to the bulk layer by polymer melt extrusion lamination to form an intermediate bonding layer between the gas barrier polymer coating of the transfer film and the bulk layer, removing the carrier film from the deposited gas barrier coating and the release layer, and applying one or more inside thermoplastic material layers to the laminated deposited gas barrier coating after removal of the carrier film.

Preferably, the bulk layer comprises crease lines and/or holes.

Preferably, the intermediate bonding layer comprises a polyolefin-based thermoplastic polymer.

Preferably, the release layer comprises a water-based or solvent-based dispersion of acrylic-based polymer, polyurethane-based polymer, acrylate/acrylic copolymers, polyvinyl acetate-based polymer or modified starch latex.

Preferably, the gas barrier polymer coating comprises at least one vinyl alcohol copolymer.

Preferably, the gas barrier polymer coating is present in a thickness selected from 0.2 to 5 µm, 0.5 to 5 µm, 0.5 to 4 µm, 0.5 to 3 µm, or 0.5 to 2.5 µm.

Preferably, the gas barrier polymer coating comprises at least two sublayers of gas barrier polymer.

Preferably, the deposited gas barrier coating comprises a vapour deposition layer.

Preferably, the vapour deposition layer comprises aluminium metal, aluminium oxide (AlOₓ), silicon oxide (SiOₓ) or diamond-like carbon (DLC).

Preferably, the carrier film comprises a polyester-based polymer or polyamide-based polymer.

Preferably, the polyester-based polymer or polyamide-based polymer is biaxially orientated.

Preferably, the polyester-based polymer has a melting temperature (Tm) greater than 180 °C and comprises polyethylene terephthalate (PET), polyethylene naphthalate (PEN), polybutylene terephthalate (PBT), polyethylene furanoate (PEF), polytrimethylene furanoate (PTF), polytrimethylene terephthalate (PTT), or polyhydroxyalkanoates (PHAs) and their co-polymers.

Preferably, the polyester-based polymer preferably comprises polyethylene terephthalate (PET), polyethylene naphthalate (PEN), polybutylene terephthalate (PBT), or polyhydroxyalkanoates (PHAs) and their co-polymers.

Preferably, the one or more inside thermoplastic material layers comprises a polyethylene-based thermoplastic polymer and optionally an additional adhesive layer.

Preferably, the method further comprises applying one or more outermost layers to the laminated bulk layer.

Preferably, the method further comprises applying the one or more outermost layers by extrusion coating or dispersion coating.

Preferably, the one or more outermost layers comprises a polyethylene-based thermoplastic polymer.

Preferably, the method further comprises rewinding the carrier film after removal from the deposited gas barrier coating.

In a second aspect, the invention relates to a laminated packaging material optionally made according to the first aspect for packaging of liquid or semi-liquid food products, comprising from outside to inside:
- an outermost material layer;
- a bulk layer of paper of paperboard or other cellulose-based material;
- an intermediate bonding layer of polyolefin-based thermoplastic polymer applied via melt extrusion lamination;
- a gas barrier polymer coating;
- a vapour deposited gas barrier coating;
- a release layer comprising a water-based or solvent-based dispersion of acrylic-based polymer, polyurethane-based polymer, acrylate/acrylic copolymers, polyvinyl acetate-based polymer or modified starch latex; and
- one or more inside thermoplastic material layers, comprising an innermost liquid-tight, heat sealable material layer.

The gas barrier polymer coating and the vapour deposited gas barrier coating are thus not connected to a substrate layer or carrier film in the laminated packaging material. The gas barrier coatings have been transferred by extrusion lamination to adhere to, and be supported by, the intermediate bonding layer of polyolefin-based thermoplastic polymer instead. Subsequently, they have been melt extrusion-coated by the one or more inside thermoplastic materials layers, on the opposite, inner side of the vapour deposited gas barrier coating. The initial support layer being a substrate layer or so-called carrier film or carrier layer, has thus been removed and is no longer remaining in the final laminated structure.

In a third aspect of the invention there is provided a packaging container for liquid or semi-liquid food products, comprising the laminated packaging material described above.

In a fourth aspect of the invention there is provided a method of forming a packaging container for liquid or semi-liquid food products according to the third aspect from a web of the laminated packaging material or from blanks of the laminated packaging material.

All features described in connection with any aspect of the invention can be used with any other aspect of the invention.

### Detailed description

By the term "long-term storage", used in connection with the present invention, it is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

The term "liquid or semi-liquid food" generally refers to food products having a flowing content, i.e. including food products having a high viscosity, like sauces, pastes and soups, and such food products that optionally may contain only small pieces of food. Dairy and milk, soy-, rice-, grain- and seed-drinks or liquids, juice, nectar, still drinks, energy drinks, sport drinks, coffee or tea drinks, coconut water, wine, soups, crushed tomatoes, sauce (such as pasta sauce) and olive oil are some non-limiting example of food products contemplated.

The term "aseptic" in connection with a packaging material and packaging container refers to conditions where microorganisms are eliminated, inactivated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that the package has barrier properties towards gases and vapours, such as towards oxygen gas, in order to keep its original taste and nutritional value, such as for example its vitamin C content.

The term "package integrity" means the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

By the term "bulk layer" is normally meant the thickest layer or the layer containing the most material in a multilayer laminate, i.e. the layer which contributes most to the mechanical properties and the dimensional stability of the laminate and of packaging containers folded from the laminate, such as paperboard or carton. It may also be a layer providing a greater thickness distance in a sandwich structure, which further interacts with stabilising facing layers in a laminate, which have a higher Young's modulus, on each or either side of the bulk layer, to achieve sufficient mechanical properties, such as bending stiffness, for achieving structure stability of formed packaging containers. In the latter case, the bulk layer has the lowest density in the laminate, whilst being "bulky".

The term "polyethylene" (PE) refers to a polymer comprising ethylene monomers at from about 90 to 100 mol%.

The term "polypropylene" (PP) refers to a homopolymer or co-polymer of PP, e.g. a polymer comprising propylene monomers at from about 90 to 100 mol%.

Low density polyethylene (LDPE) has a density of 917 to 930 kg/m³. It is typically polymerised from ethylene monomers alone and has a branched polymer chain structure (on about 2 % of the carbon atoms), such that its molecules are less tightly packed and less crystalline, and therefore its density is lower than for linear polyethylenes, such as linear low density polyethylene (LLDPE) or high density polyethylene (HDPE).

The term "linear low density polyethylene" (or "LLDPE") covers all linear low density polyethylenes, including "ZN-LLDPE" polymerised by means of Ziegler-Natta type catalysts as well as "m-LLDPE" polymerised by catalysts of so-called "constrained geometry", or "single-site" catalysts, such as "metallocene" catalysts, and other linear low density polyethylenes. Both ZN-LLDPE and m-LLDPE are typically produced by copolymerising an ethylene monomer with a C₄-C₈, more preferably a C₆-C₈, alpha-olefin alkylene monomer, the latter in the presence of a metallocene catalyst. 1 to 10 mol%, suitably 8 to 10 mol%, comonomer content is typical. LLDPE has significant numbers of short branches. It differs structurally from conventional LDPE because of the absence of long chain branching. LLDPE polymer typically has a narrower molecular weight distribution than conventional LDPE (this is true for m-LLDPE especially) and significantly different rheological properties.

For the lower density type of polyethylenes, i.e. having a density below 1 kg/m³, one micrometer thickness in a melt extrusion applied layer roughly corresponds to about 0.90-0.94 g/m² applied amount (grammage) of the polymer on the substrate, i.e. the grammage value is a bit lower than the micrometer thickness and a realistic conversion is possible regarding melt applied polymers, as they form a layer onto a substrate surface without penetrating into and below the surface of the substrate layer.

High density polyethylene, HDPE, has a density of 930 to 970 kg/m³. Up to 2 mol% comonomer content is typical. The lack of branching is ensured by an appropriate choice of catalyst (e.g. ZN catalysts) and reaction conditions.

The term "dispersion coating" (also called "liquid-film coating") herein relates to a coating technique in which an aqueous or substantially aqueous dispersion, suspension, emulsion or solution of a polymer is applied to the surface of a substrate layer, usually in the form of a continuous web, to form a solid, substantially non-porous film after drying. The term "dispersion" covers thus also any solution, suspension, emulsion or solution or mixes thereof, that would be capable of providing such a coating after drying. The aqueous dispersion may comprise fine polymer particles in suspension or emulsion, and thus be a latex. The term "water-dispersible" includes polymers which are capable of forming aqueous dispersions, and which preferably form coatings which are redispersible in water.

"Repulping" refers to mechanical treatment of material in water to provide a pulp comprising fibre content and water, and optionally a coarse reject fraction of non-fibre material.

### Bulk Layer

A bulk layer of paper or paperboard or other cellulose-based material for use in the invention usually has a thickness of from about 100 µm up to about 600 µm, and a surface weight of approximately 100 to 500 g/m² (gsm), preferably about 200 to 300 g/m², and may be a conventional paper or paperboard of suitable packaging quality. The purpose of the bulk layer in the laminated packaging materials of the present invention is to provide dimensional stability, rigidity and stiffness to packaging containers e.g. for use in wet and humid conditions and/or for storage of liquids and wet (heavy) food products. Preferred bulk layers are paperboards of the type "Liquid Paperboard". Liquid paperboards for larger packages typically have a bending stiffness from 260 to 475 mN and for e.g. family packs of 1L size, a paperboard of 400 to 500 µm is preferred. For portion packs of 150 to 350 mL size, a bending stiffness of 80 mN is preferred.

Before lamination, the bulk layer may have crease lines e.g. foldable weakening lines which may be embossed, imprinted, compressed (without protrusion on the other side of the bulk layer) or scored (i.e. material cut away along a line). The crease lines may typically be present on one side of the bulk layer i.e. either on the inside or on the outside of the bulk layer. Alternatively, the crease lines may typically be present on both sides of the bulk layer. Holes may also be present within the bulk layer, both with or without crease lines. If any printed décor pattern is to be applied onto the outside of the bulk layer, this step is also typically performed before lamination.

### Transfer film

The transfer film of the present invention comprises in the following order a carrier film, a release layer, a deposited gas barrier coating and a gas barrier polymer coating.

The transfer film may be a pre-manufactured, deposited gas barrier coating carrier transfer film, in which the carrier transfer film is configured to release the deposited gas barrier coating upon lamination of the deposited gas barrier surface to a further laminate layer on its opposite side.

The carrier film preferably comprises a polyester-based polymer or polyamide-based polymer. The polyester-based polymer or polyamide-based polymer may be biaxially orientated.

Suitable polymers for the carrier film have a melting temperature (Tm) greater than 180 °C so that the polymers are heat resistant to deposition by PVD processes and for melt extrusion lamination/coating processes.

Examples of suitable polymers include polyethylene terephthalate (PET), polyethylene naphthalate (PEN), polybutylene terephthalate (PBT), polyethylene furanoate (PEF), polytrimethylene furanoate (PTF), polytrimethylene terephthalate (PTT), or polyhydroxyalkanoates (PHAs) and their co-polymers. Preferred polymers are polyethylene terephthalate (PET), polyethylene naphthalate (PEN), polybutylene terephthalate (PBT), or polyhydroxyalkanoates (PHAs) and their co-polymers. The polymers used for the carrier film preferably have no coatings or surface treatment which alters the surface of the film. In one embodiment, the carrier layer is biaxially orientated PET e.g. with 12 µm thickness in an amount of 16.8 g/m².

The release function is enabled by a release layer being bonded to the carrier film with a relatively lower adhesion strength.

Thus, the transfer film comprises a carrier film and a release layer on the carrier film such that the release layer forms an interface between the deposited gas barrier coating and the carrier film.

The release layer is provided to allow the carrier film to be easily removed from the deposited gas barrier coating. Upon removal of the carrier film, the release layer will remain on the deposited gas barrier coating. The release layer may preferably be made very thin, such as in the range of a few microns only e.g. 0.5 to 5 µm, preferably 1 to 3 µm. In a preferred embodiment, the thickness of the release layer is in the range of 1 to 2 µm. The release layer may be selected so that the specific material of the carrier film can be entirely removed from the deposited gas barrier coating. The release layer or release surface may be of a suitable material fulfilling the requirements of low adhesion, process stability and food safety. The release layer may for example be a water-based or solvent-based dispersion of acrylic-based polymer, polyurethane-based polymer, acrylate/acrylic copolymers, polyvinyl acetate-based polymer, and modified starch latex. An example of an acrylic based polymer is acrylic varnish of the type "PBE" (Paint, Body and Equipment). Alternative water-based or solvent-based dispersions include, for example, nitrocellulose. Water-based polymers are advantageous because they are typically more likely to aid repulping in the fibre recycling stream as they can be dispersed in the recycling water, thus freeing the paperboard-barrier part of the laminate from the innermost polymer layers.

The deposited gas barrier coating preferably comprises at least one vapour-deposited coating.

Thin vapour-deposited layers are normally merely nanometer-thick, i.e. have a thickness in the order of magnitude of nanometers, for example of from 1 to 500 nm (10 to 5000 Å), preferably from 1 to 200 nm e.g. from 20 to 150 nm.

The deposited gas barrier coating may comprise a vapour-deposited coating comprising metal, metal oxide, silicon oxide, amorphous carbon or diamond-like carbon (DLC). Such barrier material layers typically provide barrier properties against both oxygen and water vapour. Preferred such barrier materials are aluminium, aluminium oxide and silicon oxide.

Vapour-deposited metal coatings (also referred to herein as "metallised coatings") are preferred. Metallised coatings generally provide a lower barrier to oxygen gas than aluminium foil but provide higher water vapour barrier properties than non-aluminium-foil barriers. A suitable optical density of a metallised coating is at least 1.5, preferably at least 1.8 and in some cases at least 2.5, such as at least 3.0, such as at least 3.5.

The vapour-deposited gas barrier coating may be applied by means of physical vapour deposition (PVD) or chemical vapour deposition (CVD), for example by plasma enhanced chemical vapour deposition (PECVD). PVD is typically used for metallised coatings and is also applicable to metal oxide and silicon oxide layers. Normally, an aluminium metallised coating inherently has a thin surface portion consisting of an aluminium oxide due to the nature of the metallisation coating process used. Silicon oxide and DLC coatings may, for example, be applied by a PECVD process. Preferably, a hydrocarbon gas, such as e.g. acetylene or methane, is used as process gas in a plasma for producing a coating of DLC.

A gas barrier polymer coating having gas barrier properties is applied on the deposited gas barrier coating.

The gas barrier polymer coating provides an oxygen barrier, along with the vapour-deposited coating which provides barrier properties against both oxygen and water vapour. The gas barrier polymer coating is thus protected from water vapour by the deposited gas barrier coating.

Suitable polymers for the gas barrier polymer coating may be selected from vinyl alcohol copolymers , such as polyvinylalcohol (PVOH, PVAL), ethylene-modified vinylalcohol copolymer (EVOH, EVAL) or butenediolvinylalcohol co-polymer (BVOH), and starch polymers, such as starch, modified starch and starch derivatives and blends thereof. Preferred polymers are PVOH and EVOH. Preferably, the gas barrier polymer coating comprises water-dispersible or water-soluble polymer e.g. PVOH, modified PVOH, EVOH_{aq}, starch, modified starch, and starch derivatives. Preferred grades of PVOH have at least a 98% degree of hydrolysis e.g. Poval^{®} 6-98, more preferably a 99% degree of hydrolysis e.g. Poval^{®} 15-99. Other suitable fully hydrolysed, i.e. at least more than 97,5 % hydrolysed, PVOH grades are Poval^{®} 10-98, 20-98 and 28-99. The highly hydrolysed PVOH dispersions or solutions thus contain a PVOH polymer with a relatively high molecular weight (Mw - weight average) from 65000 to 200000. Preferred water dispersible grades of EVOH_{aq} include Exceval^{®} 4104 AQ and HR-3110 and RS1117 from Kuraray. Such aqueous dispersion of an ethylene-modified polyvinyl alcohol have also a fully hydrolysed polymer with a molecular weight (Mw - weight average) from 45000 to 200000 and an ethylene content from 2 to 4 mol-%. Such vinyl-alcohol polymers and copolymers, as well as starch or starch-based polymers, are preferred due to their high inherent gas barrier properties and their film formation properties, and also due to their thermostable properties when positioned adjacent to a vapour deposited gas barrier coating, which is thin and therefor sensitive to heat load in coating and transfer lamination processes. Alternatively, the gas barrier polymer coating could comprise crosslinking coatings or solvent-based coatings.

The total thickness of the gas barrier polymer coating(s) is suitably selected from 0.2 to 5 µm, 0.5 to 5 µm, 0.5 to 4 µm, 0.5 to 3 µm, or 0.5 to 2.5 µm, such as about 1.5 µm. The amount of the total gas barrier polymer coating(s) is preferably selected from 0.5 to 5 g/m², 0.5 to 4 g/m², 0.5 to 3 g/m², 0.8 to 2.5 g/m², 0.8 to 2 g/m², or 0.8 to 1.5 g/m². In embodiments where the gas barrier coating(s) is PVOH, the amount is preferably 1.4 to 1.5 g/m². The thickness and/or amount of the total gas barrier polymer coating(s) will depend on the polymer used. Since the gas barrier polymer coating(s) is added directly onto a metallised film, there is no penetration into a fibre layer. Thus, the amount of gas barrier polymer coating(s) required may typically be less than the amount required if applied directly to a bulk layer.

If the gas barrier polymer coating is melt extrudable, a thicker coating would need to be applied e.g. at least 6 to 7 µm, and/or in an amount of 5 g/m².

Preferably, the gas barrier polymer coating(s) comprises at least two sublayers of gas barrier polymer. In these embodiments, several thinner layers by consecutive dispersion coating and drying allows for a faster line speed and provides better quality. In one embodiment, the gas barrier polymer is two layers of PVOH each in an amount of 0.85 g/m².

### Intermediate Bonding Layer

The gas barrier polymer coating of the transfer film is bonded to the bulk layer by a melt-extruded intermediate bonding layer of thermoplastic polymer (also referred to as a "lamination layer").

The intermediate bonding layer is preferably applied in an amount of 7 to 25 g/m², more preferably 10 to 25 g/m². In a preferred embodiment, an amount of 10 to 20 g/m² is used.

According to an embodiment the intermediate bonding layer comprises polyolefin, such as a lower density polyethylene, e.g. LDPE, LLDPE or m-LLDE and a blend of any two or more of these polymers. The same thermoplastic polyolefin-based materials as listed below for the outermost and innermost layers, and in particular polyethylenes e.g. LDPE, are also suitable for the intermediate bonding layer. In a preferred embodiment, the intermediate bonding layer consists of LDPE. LDPE is advantageous because it is cost-effective, it reduces the number of polymer variants in the final laminate and reduces complexity in the manufacturing process.

Alternatively, the intermediate bonding layer may comprise a polyethylene-based polymer having polar functional groups, i.e. an adhesive polymer. Such adhesive thermoplastic polymers may comprise modified polyolefins, which are mostly based on LDPE or LLDPE co-polymers or graft co-polymers with functional-group containing monomer units, such as carboxylic or glycidyl functional groups, e.g. (meth)acrylic acid monomers or maleic anhydride (MAH) monomers, (i.e. EAA or ethylene methacrylic acid copolymer (EMAA)), ethylene-glycidyl(meth)acrylate copolymer (EG(M)A) or MAH-grafted polyethylene (MAH-g-PE). Other examples of such modified polymers or adhesive polymers are so called ionomers or ionomer polymers. A preferred EEA adhesive polymer is Primacor 3540 from Dow^{®}.

Thus, the intermediate bonding layer may comprise a polyolefin-based adhesive polymer selected from a lower density polyethylene, e.g. LDPE, LLDPE or m-LLDPE, a co-polymer or graft co-polymers with functional-group containing monomer units, such as carboxylic, maleic anhydride or glycidyl functional groups, ionomers and a blend of any two or more of these polymers.

More precisely, the intermediate bonding layer may comprise a polyolefin-based polymer selected from a lower density polyethylene, e.g. LDPE, LLDPE or m-LLDE, ethylene acrylic acid copolymer (EAA), ethylene methacrylic acid copolymer (EMAA), ethylene-glycidyl(meth)acrylate copolymer (EG(M)A), maleic anhydride grafted polyethylene (MAH-g-PE), ionomer and a blend of any two or more of these polymers. In a further embodiment, the intermediate bonding layer comprises a polyolefin-based polymer selected from low density polyethylene (LDPE), ethylene acrylic acid copolymer (EAA) and ethylene methacrylic acid copolymer (EMAA). The intermediate bonding layer may be a co-extrusion of two sub-layers of thermoplastic polymers having similar melt processing properties, such as including an adhesive thermoplastic polymer on the side towards the gas barrier polymer coating(s). The intermediate bonding layer is thus either directly in contact with the gas barrier polymer(s), or if an adhesive thermoplastic polymer on the side towards the gas barrier polymer coating(s) is applied then the intermediate bonding layer is indirectly in contact with the gas barrier polymer(s). If an additional adhesive thermoplastic polymer is applied, the adhesive polymer is typically applied in an amount of 4 to 7 g/m², e.g. 6 g/m². The adhesive thermoplastic polymer is included in the total amount of thermoplastic polymer used in the intermediate bonding layer.

The melt-extruded intermediate bonding polymer layer may be treated with ozone in the gap between the extruder die and the lamination roller nip, i.e. on the molten polymer curtain.

### Other Layers of Laminated Packaging Material

The method also comprises applying one or more inside thermoplastic material layers to the laminated deposited gas barrier coating after removal of the carrier film. The one or more thermoplastic inside material layers may be laminated directly or indirectly to the deposited gas barrier coating, as long as they are arranged on the intended interior side of the deposited gas barrier coating.

The method may further comprise applying one or more outermost material layers to an outside of the laminated bulk layer. The one or more outermost material layers may be applied directly or indirectly to the bulk layer, as long as they are arranged on the intended exterior side of the bulk layer. Preferably, the one or more outermost material layers are applied to the bulk layer using melt extrusion coating or by dispersion coating of an aqueous polymer composition. The one or more outermost material layers may be a thermoplastic, heat sealable polymer, such as polyolefin, such as polyethylene. The outermost material layer may be applied by a paperboard supplier, with a printed décor pattern applied onto the outermost material layer and subsequently a lacquer layer applied onto the printed décor. As described above, these steps are typically performed before lamination.

The outer- and innermost layers of thermoplastic polymers do not normally add recognizable barrier properties to migrating gas molecules or small molecules. Their purpose is to provide a direct barrier to water or other liquids from penetrating through to the cellulose-based bulk material and other sensitive layers and to act as an aseptic barrier, maintaining package integrity to protect the filled contents inside the package, as well as preferably being heat sealable.

The outermost layer may be a layer or coating of a protective polymer, to prevent dirt and moisture from reaching the interior of the laminated material, such as a polymer layer, such as a thermoplastic polymer layer. Preferably, this layer is liquid-tight to allow the packages to be soaked in water (such as for cooling on ice) but this is not essential.

Suitable thermoplastics for the outer- and innermost layers are polyolefins such as polyethylene and polypropylene homo- or co-polymers, preferably polyethylenes and more preferably polyethylenes selected from the group consisting of LDPE, LLDPE, m-LLDPE and blends or copolymers thereof. According to an embodiment, the outermost layer is of LDPE, while the innermost layer is a blend composition of m-LLDPE and LDPE (also referred to herein as "mPE") for optimal lamination and heat sealing properties. In a preferred embodiment, the innermost layer comprises 50 to 90 wt% mLLDPE and 10 to 50 wt% LDPE, for example 70 wt% mLLDPE and 30 wt% LDPE. However, lower proportions of mLLDPE such as 10 to 50 wt% e.g. 30 wt% in such blends are also envisaged. A suitable LDPE grade is 19N730 from Ineos^{®}. A suitable grade of mLLDPE is Elite 5860 from Dow^{®}.

Alternatively, or additionally, for improving package integrity, the innermost polymer layers may include an interior layer comprising an HDPE or MDPE polymer, preferably in a blend with LDPE, thus increasing mechanical load-resistance and thermo-mechanical resistance to the inside of the laminated structure.

The outermost layer is preferably transparent. In this way, any printed décor pattern applied onto the outside of the bulk layer can be seen. This is useful in informing viewers e.g. about the contents of the package, the packaging brand and other consumer information relevant in retail facilities and/or food shops.

The outermost layer is preferably applied by extrusion coating, in which case it may typically be applied at an amount of from 7 to 12 g/m², such as 7 to 10 g/m², e.g. 8 to 9 g/m². This is lower than the amounts typically used, improving sustainability, and still makes the package liquid-tight towards the external environment. Alternatively, the outermost layer is applied in higher amounts up to 15 or 20 g/m².

Alternatively, the outer layer may be a coating of water-dispersible acrylic polymers e.g. styrene acrylic (SA) latex or styrene butadiene (SB) latex for moisture resistance, or acrylic polyolefin-based polymers such as EAA or aqueous ethylene methacrylic acid (EMAA_{aq}) dispersion polymers. Water-dispersible polymers, once applied and dried, can be redispersible in re-pulping liquid for recycling of fibres and rinsed out with the repulping liquid.

The inside polymer layers, i.e. the polymer layers located on the inside of the gas barrier coating, may be applied at total thicknesses ranging from 10 to 55 µm, or in an amount of 10 to 55 g/m², such as 15 to 45 g/m², such as 15 to 35 g/m². The lower ranges are particularly suitable for portion packs, whereas for large packs and family packs 30 to 55 g/m² may be suitable.

The inside polymer layers may comprise two or more sub-layers which may be of different compositions. The inside polymer layers comprise specifically at least the innermost liquid-tight, heat sealable material layer referred to above. The term "innermost layer" as used herein may thus refer to a sub-layer of the inside polymer layers, in the innermost position to be in contact with the filled food product. An interjacent layer may be adjacent to the innermost layer.

The innermost layer typically provides heat seal properties by melting and being thermowelded across the whole sealing zone; the interjacent layer if present may also take part in heat sealing, e.g. by melting and being thermowelded in part of the sealing zone.

At least one innermost layer of a thermoplastic, heat sealable polymer, such as a polyolefin, such as polyethylene, is necessary to suit high-speed packaging machinery of the form-fill-seal type, and further essential for packaging of liquids.

An adhesive layer (also referred to as a "tie layer") may be provided as part of the inside polymer layers, adjacent to the release layer. In preferred embodiments, an adhesive layer is not required when a suitable release coating is used. However, if the release layer provides poor adhesion to the innermost layer, an adhesive layer may be used to improve adhesion between the release layer and innermost layer. The adhesive layer polymer should preferably not participate in the heat sealing, but stay put in place. Suitable materials for the adhesive layer polymer are as for the intermediate bonding layer adhesive polymers discussed above. Tie layers are typically applied at a thickness of from 3 to 8 g/m². The inside polymer layers (or one or more sub-layers thereof) are preferably applied by extrusion coating. The tie layer may be co-extruded with other inside polymer layers. In particular, the innermost layer may be bonded to the gas barrier coatings via a tie layer e.g. of adhesive polymer such as ethylene acrylic acid copolymer (EAA), which is preferably co-extruded with the innermost layer. In one embodiment, a tie layer of 6 g/m² EAA is used to bond an innermost layer of 19 g/m² mPE.

The inside polymer layers may, alternatively, include a pre-manufactured oriented or non-oriented film, for improving package integrity if needed. In an embodiment, the innermost layer may be applied in the form of a pre-manufactured oriented or non-oriented film. Preferably, such a film is a thin cast, biaxially oriented film of LLDPE, e.g. of a thickness from 15 to 20 µm, such as 17 µm.

### Method of Making Laminated Packaging Material

The method of making the laminated packaging material comprises laminating the transfer film to the bulk layer by polymer melt extrusion lamination to form an intermediate bonding layer between the gas barrier polymer coating of the transfer film and the bulk layer and removing the carrier film from the deposited gas barrier coating and preferably applying the outermost layer and innermost polymer layers.

The intermediate bonding layer suitably bonds the bulk layer to the gas barrier polymer coating by melt extruding a molten curtain of thermoplastic bonding polymer between a web of the bulk layer and a web of the transfer film. The three layers are simultaneously pressed together while being forwarded through a cooled lamination roller nip, thus solidifying the molten polymer layer as it adheres to each of the two webs on each respective side, to provide a laminated structure.

The carrier film is subsequently removed by, e.g. initiating separation, pulling the film away from the laminated structure and winding the carrier film onto a reel.

In a preferred embodiment, the bulk layer and transfer film are laminated and the carrier film removed, followed by application of the inside polymer layers and then the outermost layer (or less preferably followed by application of the outermost layer and then the inside polymer layers). The former order is referred to as "LID" wherein L= lamination of bulk layer to gas barrier coating; I = application of innermost layer to gas barrier coating; D (décor) = application of outermost layer onto bulk layer. The latter less preferred alternative is referred to as "LDI". Alternatively, the bulk layer may be initially joined to the outermost layer before lamination to the transfer film. This order is referred to as "DLI".

### Packaging Container and Method of Making Packaging Container

The packaging container may be made from a web of the recyclable laminated packaging material or from blanks of the recyclable laminated packaging material, as discussed in more detail below; various possible shapes of container are indicated.

According to a further embodiment, the packaging container formed from the laminated packaging material may be partly sealed, filled with liquid or semi-liquid food and subsequently sealed, by sealing of the packaging material to itself, optionally in combination with a plastic opening or top part of the package. Induction heat sealing is preferred for laminated packaging materials containing metallised barrier layers. Ultrasonic heat sealing and hot air sealing are alternative possibilities.

### Description of preferred embodiments

In the following, preferred embodiments of the invention will be described with reference to the drawings, in which:
Fig. 1a shows an example of the advantageous effect of polymer melt extrusion lamination of a metallized transfer film onto a creased paperboard.
Fig. 1b shows a comparative example of the disadvantageous effect of wet lamination of a metallized transfer film onto a creased paperboard.
Fig. 2 is a schematic view of a part of a method for producing a packaging material according to Fig. 1a.
Fig. 3 is a cross-sectional view of a packaging material according to Fig. 1a and Fig. 2.
Fig. 4 is showing a diagrammatic view of a plant for physical vapour deposition (PVD) coating, by using a solid metal evaporation piece, onto a paper substrate or film.
Fig. 5a is a cross-sectional view of a metallization transfer film for use during production of a packaging material according to Fig. 2.
Fig. 5b is a cross-sectional view of a metallization transfer film for use during production of a packaging material according to another example.
Fig. 6a, 6b, 6c and 6d are showing typical examples of packaging containers produced from the laminated packaging material according to the invention.
Fig. 7 is showing the principle of how packaging containers as shown in Fig. 6a and 6b are manufactured from the packaging laminate in a continuous, roll-fed, form-fill- and seal process.

### Example

An example laminated packaging material was prepared with the structure of outermost layer / bulk layer / intermediate bonding layer / gas barrier polymer coating / vapour deposited gas barrier coating / release layer / 2 x inside thermoplastic material layers.

The example had the following structure:
12 g/m² LDPE / 260 mN paperboard / 20 g/m² LDPE / 1.4 g/m² PVOH / 50 nm Al-metal / release layer / 6 g/m² EAA / 19 g/m² mPE.

The LDPE in the outermost layer was Ineos^{®} 19N730.

The paperboard bulk layer was creased board with hole having a bending stiffness (GM) of 260 mN.

The LDPE in the intermediate bonding layer was Ineos^{®} 19N730.

The PVOH gas barrier polymer coating was Poval^{®} 15-99 from Kuraray.

The vapour deposited gas barrier coating was 50 nm thick conventional aluminum metallization.

The carrier film was a BOPET film of 12 µm thickness in a metallised PET transfer film with a release coating of 1 to 2 µm thickness. The coated film was of the type "Sarafil^{®} RMC" from Polyplex.

The EAA inner sub-layer of the inside thermoplastic material layers was Primacor^{®} 3540.

The mPE in the innermost sub-layer of the inside thermoplastic material layers was mPE-DryBlend Elite^{®} 5860 / Dow^{®} LDPE 770G.

The laminated packaging material was formed in the order referred to as "LID" as follows.

The bulk layer and gas barrier coated transfer film were laminated, followed by removal of the carrier film from the deposited gas barrier coating. In the next step, the deposited gas barrier coating was laminated to the inside thermoplastic layer(s) including the innermost layer, followed by application of the outermost layer.

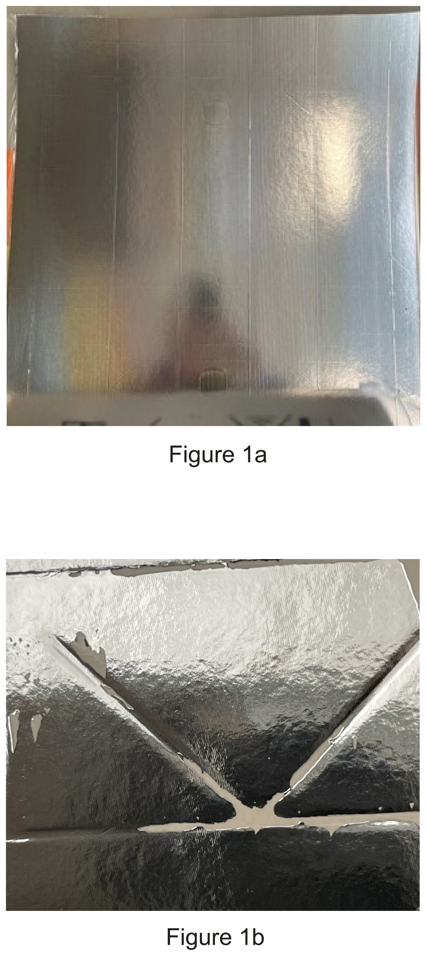

The result shown in Figure 1a is complete transfer of the metallization layer across the full laminate surface, including along crease lines imprinted on the paperboard.

The same laminated packaging material was prepared as above, but using wet laminating transfer lamination using 3 to 6 g/m² of aqueous adhesive (dry weight).

As transfer lamination requires full contact between carton and metallized film, there are problems with wet lamination as shown in Fig. 1b. The thin layer of wet dispersion coating, which is applied onto the gas barrier coatings on the transfer film, does not fully contact the linear areas along the pre-formed crease lines of the paperboard, even when using a soft rubber press-roller in the lamination roller nip. Without full contact between the adhesive-coated transfer film and the paperboard, there are areas on the paperboard surface that are not covered by the wet dispersion adhesive, such that the metal is not transferred from the transfer film to the paperboard.

Fig. 1b thus shows the disadvantageous effect of wet lamination of a metallized film to the bulk layer, as opposed to extrusion lamination of the metallized film to the bulk layer. The wet adhesive as applied by wet coating has not reached into all areas of the imprinted crease lines and thus not provided complete adhesion between the barrier coatings and the bulk layer. The metallized layer has remained attached to the carrier film along the linear zones of the crease lines.

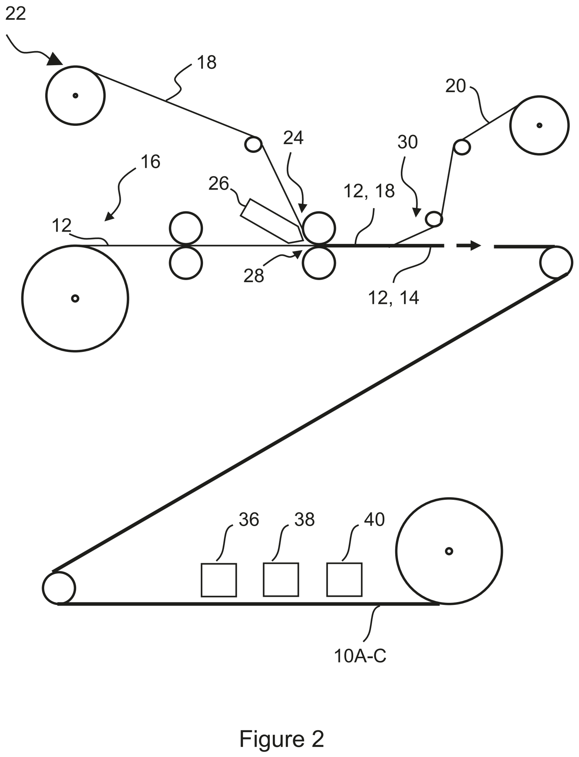

Further, relating to the attached figures:
Turning to Fig. 2, a method for producing a packaging material 10 is schematically shown. Notably, the shown method is focusing on the lamination of the gas barrier polymer and deposited metal layer composite 14 to the bulk layer 12. As is readily understood, several additional steps or sub-processes may be included upstream and/or downstream to form a packaging material 10A-C ready to be used in industrial packaging applications.

As is shown in Fig. 2, the bulk layer 12 is supplied in the form of a continuous web from a first supply station 16. Similarly, the metallization transfer film 18, including the gas barrier polymer and deposited metal layer composite 14 and the carrier film 20, is also supplied in the form of a continuous web from a second supply station 22. The metallization transfer film 18 is guided towards the bulk layer 12, and bonded to the bulk layer 12 in a lamination station 24. In the particular example of Fig. 2, the lamination station 24 comprises an extrusion device 26, configured to laminate the two continuously forwarded material webs to each other, by melt extrusion lamination by means of an intermediate thermoplastic bonding polymer.

For this purpose, the extrusion device 26 provides a thin curtain of molten polymer to enter the roller nip where the two webs meet, to form a bonding layer between the bulk layer 12 and the metallization transfer film 18. Notably, the metallization transfer film 18 is arranged such that the gas barrier polymer and deposited metal layer composite 14 faces the bulk layer 12 i.e. the bonding layer is formed between the bulk layer 12 and the gas barrier polymer coating of the gas barrier polymer and deposited metal layer composite 14. The extrusion device 26 is configured to provide the layer of molten bonding polymer, e.g. being low density polyethylene (LDPE), to a lamination roller nip 28, which presses the bulk layer 12 towards the metallization transfer film 18 whereby the extruded bonding polymer provides the desired lamination by rapidly solidifying into an intermediate layer 32, thus adhering to the webs on its respective sides. After exiting the nip 28, the metallization transfer film 18 is thus laminated to the bulk layer 12.

After lamination of the metallization transfer film 18 to the bulk layer 12 the carrier film 20 is separated from the semi-laminated material comprising the bulk and the gas barrier polymer and deposited metal layer composite, 12 & 14. For this, a separation station 30 is provided. The separation station 30 may be configured to pull the carrier film 20 off the gas barrier polymer and deposited metal layer composite 14, which remains attached to the bulk layer 12 and the intermediate bonding layer 32. Separation of the carrier film 20 is enabled by means of the release layer 34 previously described, which results in the gas barrier polymer and deposited metal layer composite 14, with the release layer 34 attached, being laminated to the bulk layer 12 and remaining bonded to the bulk layer 12 as the carrier film 20 is removed.

The carrier film 20 is preferably removed in a controlled manner, e.g. by initiating separation and winding the carrier film 20 onto a reel as illustrated in Fig. 2. This part of controlled removal of the carrier film 20 may enable a recycling process of the polymer of the carrier film 20, or allowing the carrier film 20 to be reused by again coating the carrier film 20 with a release layer 34 and subsequent deposition or coating of a thin gas barrier polymer and deposited metal layer composite 14.

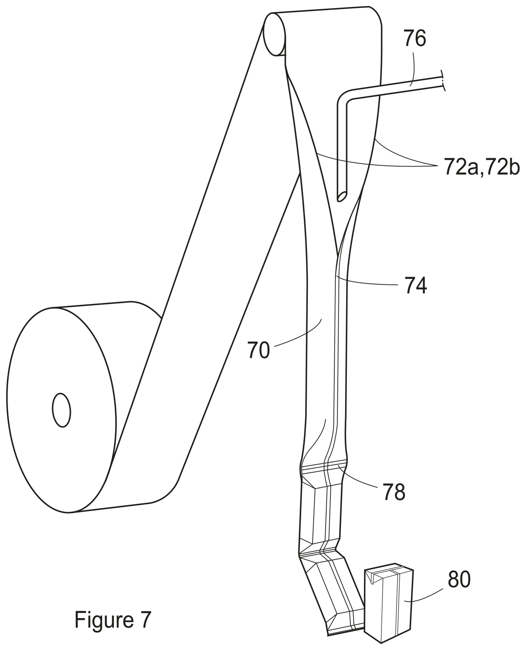

After lamination of the gas barrier polymer and deposited metal layer composite 14 to the bulk layer 12, the semi-laminated packaging material is further processed, such as by an optional station 36 for cutting or punching of holes or slits in the material, an inside layer(s) lamination station 38, for applying further layers to the inside of the bulk layer, and an outside layer(s) lamination station 40, for applying an outermost protective layer to the outside of the semi-laminated material, in order to form the ready-to-use packaging material 10A-C. The final packaging material 10A-C may be winded onto a roll for further operations to be performed on the material, or for further handling and transport to a filling machine, as shown in Fig. 7. Such further handling may e.g. include a so called finishing process, wherein the roll is cut to produce a plurality of smaller reels with narrower winded webs of packaging material 10A-C.

It should be noted that the optional station 36 for cutting or punching of holes or slits in the material, the inside layer(s) lamination station 38, and the outside layer(s) lamination station 40 are shown highly schematically only. The exact configuration and setup of these stations 36, 38, 40 could be designed and modified in various ways depending on the particular process design and process parameters. The operations of printing, creasing and normally also cutting, take place before the transfer lamination.

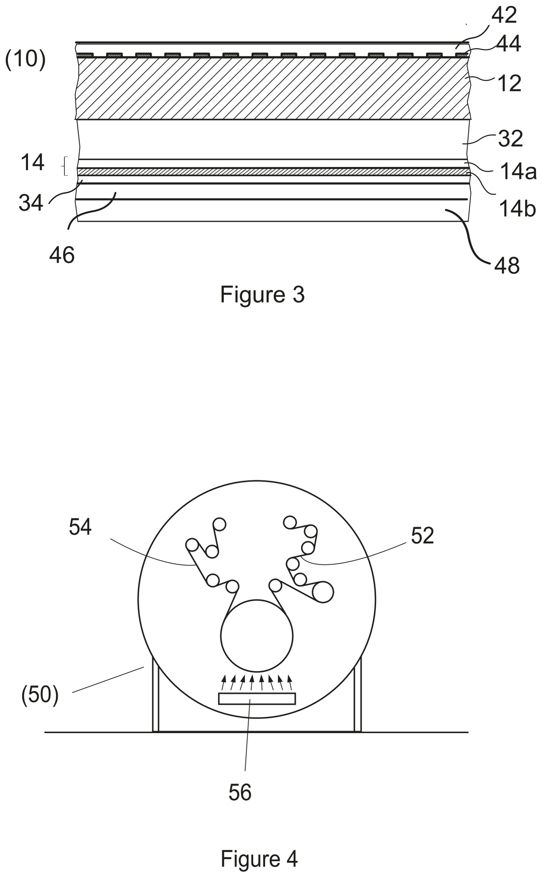

An example of packaging material 10 is shown in cross-section in Fig. 3. It should be noted that the different thicknesses of the various layers illustrated in Fig. 3 are not necessarily to scale.

In Fig. 3, a laminated packaging material 10 for liquid carton packaging is shown in cross-section, in which the laminated packaging material comprises a paperboard bulk layer 12, having a bending force of 260 mN. The laminated packaging material 10 further comprises an outer liquid-tight and heat-sealable layer 42 of polyolefin applied on the outside of the bulk layer 12, which side is to be directed towards the outside of a packaging container produced from the laminated packaging material 10. The outside polymer layer 42 is transparent to show the printed décor pattern 44, applied onto the outside of the bulk layer of paperboard.

The polyolefin of the outer layer 42 is a conventional low density polyethylene (LDPE) of a heat sealable quality. It is applied at an amount of 12 g/m².

The bulk layer 12 is bonded via intermediate bonding layer 32 of LDPE to gas barrier polymer and deposited metal layer composite 14. The intermediate bonding layer 32 is applied at an amount of 20 g/m².

The gas barrier polymer and deposited metal layer composite 14 is a multilayer gas barrier layer comprising a 50 nm vapour deposited aluminium barrier material layer 14b coated with a 1.4 g/m² PVOH layer 14a. The PVOH layer 14a is directed towards the intermediate bonding layer 32. A release layer 34 is present on the inner side of the vapour deposited aluminium barrier material layer 14b.

The gas barrier polymer and deposited metal layer composite 14 is bonded on its inner side to an inside polymer layer 48 via the release layer 34 and tie layer 46. The tie layer 46 is a polymer having polar functional groups for improved adhesion, i.e. an adhesive polymer. The adhesive polymer is an ethylene acrylic acid copolymer (EAA), applied at an amount of 6 g/m².

The inside polymer layer 48 is an innermost liquid-tight and heat-sealable layer, which is arranged to be directed towards the inside of a packaging container produced from the laminated packaging material, i.e. the inside polymer layer 48 will be in direct contact with the packaged product. This inside polymer layer 48 is to form strong transversal heat seals of a liquid packaging container made from the laminated packaging material. The inside polymer layer 48 is a blend composition of m-LLDPE and LDPE i.e. mPE. The inside polymer layer 48 is laminated to the inside of the gas barrier layer at an amount of 19 g/m².

Fig. 4 is a diagrammatic view of an example of a plant 50 for physical vapour deposition, PVD, of e.g. an aluminium metal coating or an aluminium oxide coating, onto a carrier film pre-coated with a release layer. The pre-coated carrier substrate 52 is subjected, on its pre-coated side, to continuous evaporation deposition of vaporised aluminium, to form a metallised layer of aluminium 14b or, alternatively to a mixture of oxygen with aluminium vapour, to form a deposited barrier coating of aluminium oxide. A deposited gas barrier coating on a transfer film 54 is formed. The aluminium vapour is formed from an aluminium evaporation source 56, via thermal evaporation from a resistive heated source. For the coating of aluminium oxide, some oxygen gas may also be injected into the plasma chamber via inlet ports.

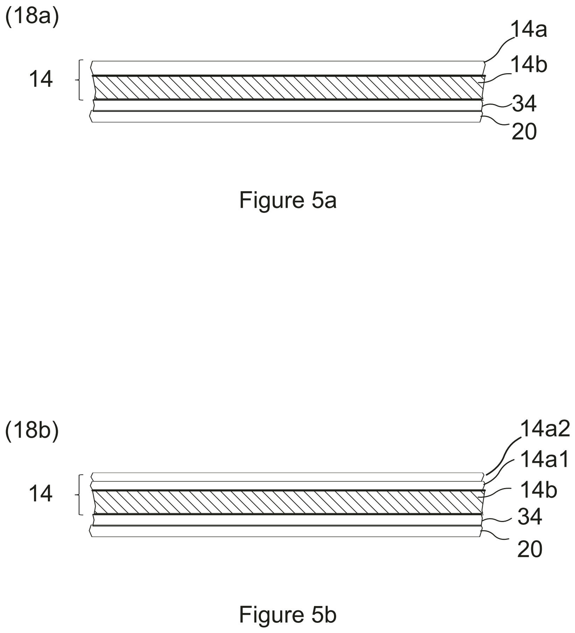

The transfer film for use during production of a packaging material according to Fig. 2 is shown in Fig. 5a. The transfer film is a pre-manufactured, metallized transfer film 18 configured to release the gas barrier polymer and deposited metal layer composite 14 upon lamination of the gas barrier polymer to a further laminate layer on its opposite side. The release function is enabled by a release layer 34 being bonded to a carrier film 20 with a relatively lower adhesion strength.

Thus, the metallized transfer film 18 comprises vacuum deposited aluminium 14b with a thickness of 50 nm. The metallized transfer film has a 12 µm thick carrier film 20 of BOPET and a release layer 34 in an amount of 1 to 2 g/m², pre-coated on the carrier film 20 such that the release layer 34 forms an interface between the vacuum deposited aluminium 14b and the carrier film 20. The vacuum deposited aluminium 14b is coated with one layer 14a of PVOH in an amount of 1.4 g/m².

An alternative example of a transfer film for use during production of a packaging material is shown in Fig. 5b. The metallized transfer film 18 comprises vacuum deposited aluminium 14b with a thickness of 80 nm. The metallized transfer film has a 12 µm thick carrier film 20 of BOPET and a release layer 34 in an amount of 1 g/m², pre-coated on the carrier film 20 such that the release layer 34 forms an interface between the vacuum deposited aluminium 14b and the carrier film 20. The vacuum deposited aluminium 14b is coated with a first layer 14a1 of PVOH in an amount of 0.85 g/m² and a second layer 14a2 of PVOH in an amount of 0.85 g/m².

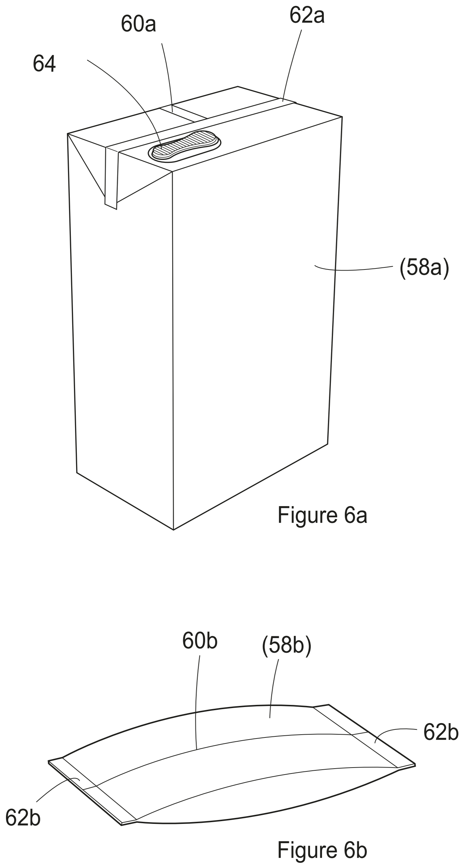

Fig. 6a shows an embodiment of a packaging container 58a produced from a packaging laminate according to the invention. The packaging container is particularly suitable for beverages, sauces, soups or the like. Typically, such a package has a volume of about 100 to 1000 mL (the latter being "family size"). It may be of any configuration, but is preferably brick-shaped, having longitudinal and transversal seals 60a and 62a, respectively, and optionally an opening device 64. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the merely partly folded packaging container is still easy to handle and dimensionally stable enough to put on a shelf in the food store or on any flat surface.

Fig. 6b shows an alternative example of a packaging container 58b produced from the packaging laminate of Fig. 3. The alternative packaging laminate is thinner than for the packages of the type shown in Fig. 6a by having a thinner paper bulk layer, and thus the not sufficiently bending stiff carton is not able to form a dimensionally stable parallelepipedal or wedge-shaped packaging container. The packaging container will remain a pillow-shaped pouch-like container after the transversal sealing and will be distributed and sold in this form.

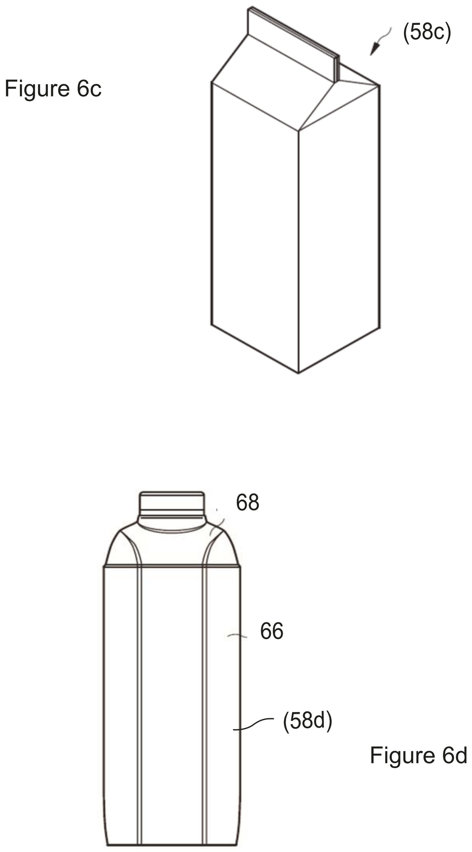

Fig. 6c shows a gable top package 58c, which is fold-formed from a pre-cut sheet or blank, from the laminated packaging material comprising a bulk layer of paperboard and the barrier-coated paper substrate of the invention. Also flat top packages may be formed from similar blanks of material.

Fig. 6d shows a bottle-like package 58d, which is a combination of a sleeve 66 formed from a pre-cut blank of the laminated packaging material of the invention, and a top 68, which is formed by injection moulding plastics in combination with an opening device such as a screw cork or the like. This type of package is for example marketed as Tetra Top^{®} packages. The latter packages are formed by attaching the moulded top 68 with an opening device attached in a closed position, to the tubular sleeve 66 of the laminated packaging material, sterilizing the thus formed bottle-top capsule, filling it with the food product and finally fold-forming the bottom of the package and sealing it.

Fig. 7 shows the principle as described in the introduction of the present application, i.e. a web of packaging material is formed into a tube 70 by overlapping the longitudinal edges 72a, 72b of the web and heat sealing them to one another, to thus form an overlap joint 74. The tube is continuously filled 76 with the liquid food product to be filled and is divided into individual, filled packages by repeated, double transversal seals 78 of the tube at a pre-determined distance from one another below the level of the filled contents in the tube. The packages 80 are separated by cutting between the double transversal seals (top seal and bottom seal) and are finally shaped into the desired geometric configuration by fold formation along prepared crease lines in the material. Corresponding pouch containers may be produced by the same principle, however omitting the final folding steps after the separation of the tube into individual pouch packages.

Advantages of preferred embodiments of the invention include:
- The bulk layer comprising pre-fabricated crease lines and/or holes before the polymer melt extrusion step is laminated to the thin gas barrier coatings/layers in a robust manner. The laminated material has reliable and even adhesion between the bulk layer and the barrier layers throughout its full extension.
- Since the carrier film is removed from the deposited gas barrier coating via the release layer, the carrier film will not form part of the final packaging material which allows for more flexibility when deciding on the material of the carrier film in order to achieve the desired properties of the deposited gas barrier coating. Further, a less complex packaging material is provided since the carrier film does not form part of it. The packaging material will contain less polymeric barrier material originating from fossil sources.

- Since laminating the transfer film to the bulk layer is performed by polymer melt extrusion lamination, the method can be performed at high speed and high yield, as it uses a conventional modern lamination process for liquid food packaging materials. The method ensures good adhesion of the gas barrier coating to the bulk layer and reduces the amount of polymer in the resulting laminated packaging material, as well as the number of different polymers i.e. the laminate polymers are substantially only polyethylene polymers. Furthermore, pure and uncrosslinked thermoplastic polymers, which are suitable for sorted polymer recycling, may be used in the intermediate bonding layer, such as polyolefins, and preferably polyethylene-based polymers, such as selected from LDPE, LLDPE and m-LLDPE. As polyethylene is the conventional type of polymer used in polymer melt extrusion lamination and melt extrusion coating of such packaging materials, this entails no implementation problems in the lamination manufacturing process, and ensures good bonding and functionality in later formed packages, especially in packages for liquid packaging.
- The method may further enable easy recycling of the carrier film after being removed from the metal layer. Enabling recycling of the carrier film may for example be performed by rewinding the carrier film onto a roll, and allow it to be used again as a carrier for a new deposited gas barrier layer. This is particularly advantageous in that a substantial amount of material may be reused in a circular system and manner. Recycling can be done by melting the film into granules and casting a new film from said granules. The recycled granules may alternatively be used in other applications.
- The lamination process can be performed at high speed when avoiding heat drying and/or curing processes, and solvent- or aqueous based lamination adhesives, or crosslinking adhesives, as conventionally used for transfer metallization processes, in so-called dry lamination or wet lamination operations.
- The deposited gas barrier layer has a significantly reduced thickness as compared to traditional metal barrier foils used in the industry. Considerably less metal material, as well as considerably less polymer material, would then be required, thus improving the packaging material in terms of sustainability and recycling.
- Lamination of one or more inside layers e.g. comprising HDPE or LLDPE, is advantageous in that the intended product to be enclosed by a packaging container formed by the packaging material may not come in direct contact with the gas barrier coating layers thereby strengthening the package integrity to preserve food safety and packaging material rigidity.
- A benefit of the outer layer includes protecting the bulk layer from external forces and scratches thereby producing a more robust and wear-resistant packaging material. If the outer layer is thermoplastic and heat sealable, this also has the advantage of enabling heat sealing of outside to inside, thus providing a total liquid barrier in case of a wet environment.

As a final remark, the invention is not limited by the embodiments shown and described above but may be varied within the scope of the claims.

### List of reference numerals:

10 - packaging material
12 - bulk layer
14 - gas barrier polymer and deposited metal layer composite
14a - PVOH layer
14a1 - first PVOH layer
14a2 - second PVOH layer
14b - vapour deposited aluminium barrier material layer
16 - first supply station
18a, 18b - metallization transfer film
20 - carrier film
22 - second supply station
24 - lamination station
26 - extrusion device
28 - lamination roller nib
30 - separation station
32 - intermediate bonding layer
34 - release layer
36 - optional station for cutting or punching
38 - inside layer(s) lamination station
40 - outside layer(s) lamination station
42 - outer liquid-tight and heat-sealable layer
44 - décor pattern
46 - tie layer
48 - inside polymer layer
50 - plant for PVD
52 - pre-coated carrier substrate (film for transfer)
54 - deposited gas barrier coating on a transfer film
56 - aluminium evaporation source
58a-d - packaging container
60a-b - longitudinal seal
62a-b - transversal seal
64 - opening device
66 - sleeve
68 - top
70 - tube
72a-b - longitudinal edge
74 - overlap joint
76 - continuous fill
78 - transverse seals
80 - packages

## Claims

1. A method for producing a laminated packaging material for packaging of liquid or semi-liquid food products, comprising:
providing a bulk layer (12) of paper or paperboard or other cellulose-based material,
providing a transfer film (18a; 18b), the transfer film comprising in the following order a carrier film (20), a release layer (34), a deposited gas barrier coating (14b) and a gas barrier polymer coating (14a; 14a1 and 14a2),
laminating the transfer film to the bulk layer by polymer melt extrusion lamination to form an intermediate bonding layer (32) between the gas barrier polymer coating (14a; 14a1 and 14a2) of the transfer film (20) and the bulk layer (12),
removing the carrier film (20) from the deposited gas barrier coating (14b) and the release layer (34), and
applying one or more inside thermoplastic material layers (46, 48) to the laminated deposited gas barrier coating after removal of the carrier film (20).

2. The method according to Claim 1, wherein the bulk layer (12) comprises crease lines and/or holes.

3. The method according to Claim 1 or Claim 2, wherein the intermediate bonding (32) layer comprises a polyolefin-based thermoplastic polymer.

4. The method according to any one of the preceding claims, wherein the release layer (34) comprises a water-based or solvent-based dispersion of acrylic-based polymer, polyurethane-based polymer, acrylate/acrylic copolymers, polyvinyl acetate-based polymer or modified starch latex.

5. The method according to any one of the preceding claims, wherein the gas barrier polymer coating (14a; 14a1 and 14a2) comprises at least one polymer selected from vinyl alcohol copolymers, such as polyvinylalcohol (PVOH, PVAL), ethylene-modified vinylalcohol copolymer (EVOH, EVAL) or butenediolvinylalcohol co-polymer (BVOH), starch polymers, such as starch, modified starch and starch derivatives and blends thereof.

6. The method according to any one of the preceding claims, wherein the gas barrier polymer coating (14a; 14a1 and 14a2) is present in a thickness selected from 0.2 to 5 µm, 0.5 to 5 µm, 0.5 to 4 µm, 0.5 to 3 µm, or 0.5 to 2.5 µm.

7. The method according to any one of the preceding claims, wherein the gas barrier polymer coating (14a) comprises at least two sublayers (14a1 and 14a2) of gas barrier polymer.

8. The method according to any one of the preceding claims, wherein the deposited gas barrier coating (14b) comprises a vapour deposition layer.

9. The method according to Claim 8, wherein the vapour deposition layer (14b) comprises aluminium metal, aluminium oxide (AlOₓ), silicon oxide (SiOₓ) or diamond-like carbon (DLC).

10. The method according to any one of the preceding claims, wherein the carrier film (20) comprises a polyester-based polymer or polyamide-based polymer.

11. The method according to Claim 10, wherein the polyester-based polymer or polyamide-based polymer is biaxially orientated.

12. The method according to Claim 10 or Claim 11, wherein the polyester-based polymer has a melting temperature (Tm) greater than 180 °C and comprises polyethylene terephthalate (PET), polyethylene naphthalate (PEN), polybutylene terephthalate (PBT), polyethylene furanoate (PEF), polytrimethylene furanoate (PTF), polytrimethylene terephthalate (PTT), or polyhydroxyalkanoates (PHAs) and their co-polymers.

13. The method according to Claim 12, wherein the polyester-based polymer preferably comprises polyethylene terephthalate (PET), polyethylene naphthalate (PEN), polybutylene terephthalate (PBT), or polyhydroxyalkanoates (PHAs) and their co-polymers.

14. The method according to any one of the preceding claims, wherein the one or more inside thermoplastic material layers (46; 48) comprises a polyethylene-based thermoplastic polymer (48) and optionally an additional adhesive layer (46).

15. The method according to any one of the preceding claims, further comprising applying one or more outermost layers (42) to the laminated bulk layer.

16. The method according to Claim 15, comprising applying the one or more outermost layers (42) by extrusion coating or dispersion coating.

17. The method according to Claim 15 or Claim 16, wherein the one or more outermost layers (42) comprises a polyethylene-based thermoplastic polymer.

18. The method according to any one of the preceding claims, further comprising rewinding the carrier film (20) after removal from the deposited gas barrier coating (14b).

19. A laminated packaging material (10) optionally made according to any one of Claims 1 to 18 for packaging of liquid or semi-liquid food products, comprising from outside to inside:
- an outermost material layer (42);
- a bulk layer (12) of paper of paperboard or other cellulose-based material;
- an intermediate bonding layer (32) of polyolefin-based thermoplastic polymer applied via melt extrusion lamination;
- a gas barrier polymer coating (14a; 14a1 and 14a2);
- a vapour deposited gas barrier coating (14b);
- a release layer (34) comprising a water-based or solvent-based dispersion of acrylic-based polymer, polyurethane-based polymer, acrylate/acrylic copolymers, polyvinyl acetate-based polymer or modified starch latex; and
- one or more inside thermoplastic material layers (46; 48), comprising an innermost liquid-tight, heat sealable material layer (48).

20. A packaging container (58a; 58b; 58c; 58d) for liquid or semi-liquid food products, comprising the laminated packaging material (10) according to Claim 19.

21. A method of forming a packaging container (58a; 58b; 58c; 58d) for liquid or semi-liquid food products according to Claim 20 from a web of the laminated packaging material (10) or from blanks of the laminated packaging material (10).
